Europäisches Patentamt

European Patent Office

Office européen des brevets

(19)

(11) Publication number: **0 109 708**
**B1**

# EUROPEAN PATENT SPECIFICATION

(45) Date of publication of patent specification: **23.07.86**

(51) Int. Cl.⁴: **A 22 C 21/00**

(21) Application number: **83201619.0**

(22) Date of filing: **15.11.83**

(54) **Method and apparatus for dividing slaughtered poultry into a back half and a front half.**

(30) Priority: **18.11.82 NL 8204464**

(43) Date of publication of application:
**30.05.84 Bulletin 84/22**

(45) Publication of the grant of the patent:
**23.07.86 Bulletin 86/30**

(84) Designated Contracting States:
**AT BE CH DE FR GB IT LI LU NL SE**

(56) References cited:
**EP-A-0 067 462**
**WO-A-82/00001**
**US-A-2 807 046**
**US-A-3 639 945**
**US-A-3 675 272**
**US-A-3 731 344**
**US-A-4 270 243**

(73) Proprietor: **STORK PMT B.V.**
**43a Wim de Körverstraat**
**NL-5831 AN Boxmeer (NL)**

(72) Inventor: **Van Mil, Martinus P.G.**
**12 Sweelinck**
**NL-5831 KS Boxmeer (NL)**

(74) Representative: **van der Arend, Adrianus G.A., Ir.**
**et al**
**EXTERPATENT Willem Witsenplein 4**
**NL-2596 BK 's-Gravenhage (NL)**

Courier Press, Leamington Spa, England.

## Description

The invention relates to a method for dividing the body of a slaughtered fowl transversely into a back half consisting of the legs, pieces of thighs corresponding to said legs and a portion of the back and a front half, consisting of a breast part and a major portion of the back part of the body.

A method of this kind is known from the United States Patent 3.675.272. With this known method the fowl is transferred to a first handling station where it is manually picked up and with its breast guided over a bar and is cut transversally as it is advanced laterally by a cutter into said back half and said front half. Subsequently the segregated halfs are transferrd to second and third stations where said halfs are manually picked up and divided into subsequent parts of the fowl. The transfer operations are provided by conveyor means, in particular endless conveying belts on which the fowls and subsequent halves are disposed in an arbitrarily orientation.

A major disadvantage of the known method is, that after the first cutting operation in the first handling station the back half will comprise a part of the breast located at the rear opening of the fowl, i.e. the boundary of said rear opening between the legs, while the front half is not comprising the complete breast, which leads to commercially undesirable halves or subsequent parts obtained from said halves comprising or lacking respectively said breast edge portion of said rear opening.

The size of the breast edge portion of the rear opening will be dependent on the size and species of the fowl, and thus different fowls will provide halves or parts thereof with different ratios of said undesirable edge portion to the remainder of the body. Since subsequent bodies to be cut are not forced into the same orientation, the halves or parts obtained therefrom will most likely differ from one fowl to the other even in case of equal size and species.

It is an object of the invention to overcome the disadvantages of the known method.

Therefore the present method is characterised in that said body suspended by its legs from a conveying means, being advanced with its breast forwardly directed in the direction of conveyance and being cut to said halves during its conveyance by a cutting operation in which prior to and during said cutting operation, the body is brought into an inclined position relative to said direction of conveyance such that the legs are positioned in front of the rest of the body, while a boundary with the breast forming edge portion of the rear opening of the body present between the legs is pulled away from between the legs, and that said cutting operation is performed transversally in a plane extending between said pulled away edge portion and the thighs.

Subsequently the back half will not comprise an undesirable part of the breast, i.e. the breast edge portion of the rear opening of the fowl between the legs. In addition, since each fowl to be cut is equally orientated, each fowl will be cut in the same relative direction, which will result in substantially equally divided respective halves of said different fowls. Therefore said halves will be commercially attractive and, in addition very well suited to be divided subsequently.

Preferably the back half of the body suspended from the conveying means is supported at least in the area where the cutting operation is performed, thus preventing the undesirable effect of damaging the body during or after cutting. According to the invention, it is possible to obtain in a simple manner other commercially attractive portions of said halves in a subsequent step by dividing the cut-off half of the body longitudinally vertically between those legs.

The invention also provides an apparatus suitable for dividing the body of a slaughtered fowl into a back half consisting of the legs, pieces of thighs corresponding to said legs and a portion of the back, and a front half consisting of the breast part and a major portion of the back part of the body characterised by a conveyor system connected to a frame and adapted for conveying said body which is suspended by its legs during its conveyance, said body passing with its breast in the direction of conveyance through a cutting apparatus provided on the frame; and an arm which is pivotably mounted to said frame, said arm being pivotable on a spindle extending perpendicular to the direction of conveyance between an upper position of one free end of the arm, to which position it is forced by a counteracting device, and a lower position of said free end, said lower position being downstream of said upper position when viewed in the direction of conveyance, said free end being provided with a gripping element engaging a boundary of the breast forming edge portion of the rear opening present between the legs so that during conveyance of the body engaging the gripping element the arm is pivoted with its free end downwardly, said edge portion is pulled downwardly and the breast is pivoted correspondingly and that the body is cut transversally by at least one cutter of the cutting apparatus in a extending between said downwardly pulled edge portion and the thighs. In this, simple, embodiment of the apparatus according to the invention, the forward movement of the body against the free end of the arm which is in its upper position and the effect of the counteracting device, cause the body of the fowl on its way to the cutting apparatus to be tilted with the legs forwardly directed and the said edge portion of the rear opening to be pulled below the cutting plane of said cutter, so that the cutter will not touch the breast part. After the body has been divided into said halves, the back half will not comprise an undesired part of the breast.

Preferably the gripping element consists of a projection, which is inclined downwarly and in a direction opposite to the direction of conveyance and which is adapted to extend beyond said edge portion into said engaging body during pivoting of the arm.

Preferably a scoop-shaped element is fixed to the arm below the gripping element and being capable of partially receiving the breast of the body. This facilitates the positioning of the body, while simultaneously preventing the breast from being damaged during the cutting operation. In addition, the result of this measure is, that during the reverse movement of the arm after cutting, the cut-off front half of the body, which has not been dropped yet, is thrown off the cutting members, so that during collection of such front halves an obstruction of, in particular, the cutting apparatus is prevented.

The counteracting device may consist of a spring connected between the arm and the frame and providing a torque which forces the free end to its upper position. While the body is transferred towards the cutting apparatus, the spring provides a counteracting force, so that the body is tilted. An additional advantage of this embodiment is that the return of the arm to the upper position of the free end thereof does not require any complex drive means.

Instead of said spring the counteracting device may consist of a weight fixed to the arm.

Preferably the apparatus is provided with a cam which is rotatably driven about a spindle shaft perpendicular to the direction of conveyance in synchronism with the conveyance of a series of bodies and which by pushing against the arm returns the free end thereof from the lower position to the upper position thereof. This extremely increases the processing speed of the apparatus, while preventing the free end of the arm from returning too late into the upper, initial, position and from incorrectly engaging the next body arriving.

Especially with the embodiment of the apparatus having the cam acting upon the arm, there may occur two strong accelerations and/or oscillations, particularly when reaching the upper position of the free end of the arm and as determined by an abutment. On the one hand, this may limit the processing speed of the apparatus, while on the other hand this may result in damage to the construction by the arm. For this reason, the apparatus is preferably provided with a damping device coupled to the arm.

In addition, the pivot of the arm is located at a level above the cutter. Therefore it is possible to fully utilize the space below the cutter for collecting the cut-off front halves of the bodies, while excluding the possibility of polluting and obstructing the arm construction due to dropping body pieces.

Preferably the apparatus is provided with a guide arrangement providing a longitudinal passage for the body running substantially in the direction of conveyance, the width of the passage gradually decreasing in the direction of conveyance to such an extent and the borders of the passage rising to such an extent that in the area where the body is cut, the thighs project laterally beyond the passage borders and the body takes an inclined, backwardly directed position. Such a guide arrangement can independently act as the counteracting device for bringing the body into an inclined position. On the other hand, the guide arrangement can also be used with the object to fascilitate the tilting of the body under the influence of a counteracting device formed by another means and the lateral positioning of said body.

Preferably the apparatus is provided with a guide system extending over the first cutter and adpated to support the suspended cut-off back half of said body. This prevents the suspended cut-off back half of the body from being damaged by the cutter.

According to another feature of the invention, the cutting apparatus comprises at least one additional cutter which, viewed in the direction of conveyance, is disposed downstream of said transverse cutting cutter and which cut the suspended cut-off back half of the body longitudinally in a plane extending vertically between the legs of said body. This embodiment of the apparatus according to the invention afforce obtaining in a simple manner back-quarters, each consisting of a leg, a thigh portion and a back portion, whereas the remaining front half of the body comprises the complete breast which can be sold in one piece.

The invention is explained with reference to the drawing, in which:

Fig. 1 is a side view of an embodiment of the apparatus according to the invention;

Fig. 2 is an enlarged front view of a portion of the conveyor system of fig. 1;

Fig. 3 is a side view of a portion of the apparatus of fig. 1 in another embodiment;

Fig. 4 is a side view of the same apparatus in yet another embodiment;

Fig. 5 illustrates the body halves of a slaughtered bird as obtained after a first cutting operation of the apparatus shown in the preceding figures;

Fig. 6 is a preferred embodiment of the apparatus according to the invention.

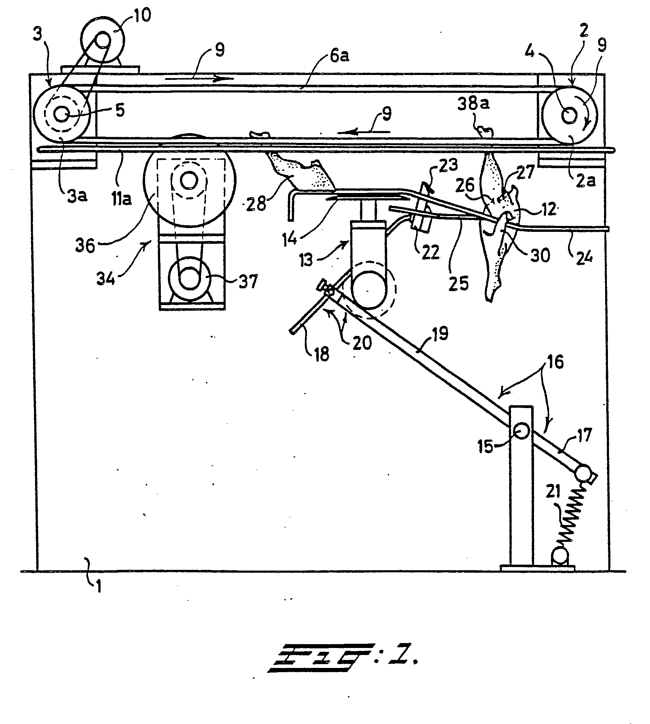

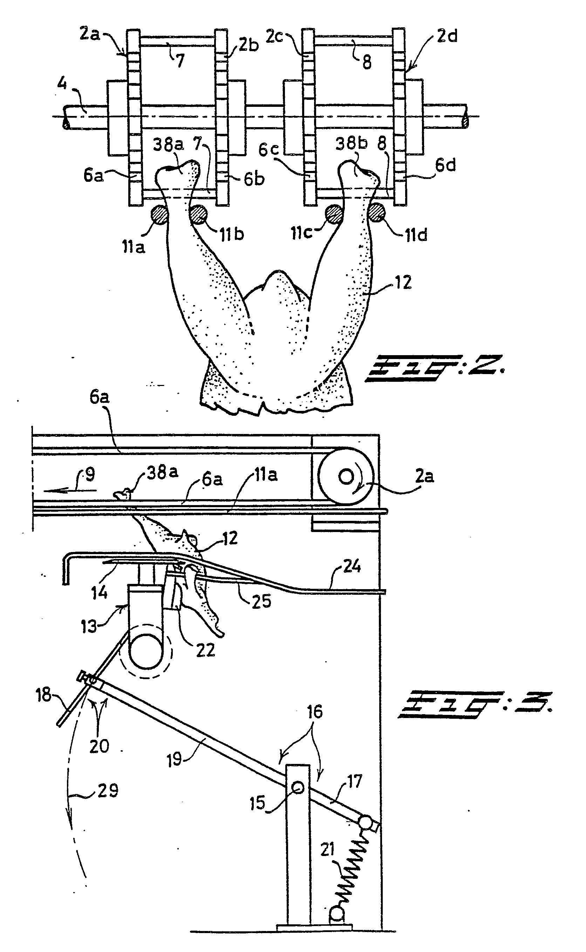

Fig. 1 shows an embodiment of the cutting apparatus according to the invention comprising a frame, mainly schematically, represented by a wall, to which there is fixed a conveyor arrangement a front view of which is partially shown in fig. 2. The conveyor arrangement comprises two gear-wheel assemblies 2, 3 each consisting of four gear wheels mounted on a common shaft 4 and 5, respectively, the shaft 4 and the gear wheels 2a through 2d being shown in Fig. 2. The gear wheels of the one assembly are located opposite the respective gear wheels of the other assembly, the gear wheels of each opposite assembly being interconnected by means of a chain 6a to 6d, respectively. Between the links of the pair of chains 6a and 67b and of the pair 6c and 6d there are provided, at regular intervals in the longitudinal direction of the chains, pins 7 and 8, respectively. The gear wheel assembles 2, 3 and the chains 6, are driven in the direction indicated by the arrows 9, by means of a drive coupled to the gear-wheel assembly 3.

At a small distance underneath the pins 7, 8 there are mounted to the frame, between the chain pairs 6a, 6b and 6c, 6d, respectively, guide rods 11a, 11b and 11c, 11d, respectively, which run parallel to the chains, so that the legs of a slaughtered bird body 12, which is in particular a chicken ready for the frying pan, can be passed with little clearance between the respective guide rod assembles, the dull ends 38a, 38b of the legs being supported on the respective guide rods and being pushed by the guide pins 7, 8 in the direction of the arrows 9, from a supply point located in the area of the gear-wheel assembly 2 in the direction of a discharge point located in the area of the gear-wheel assembly 3. It should be noted that the body 12 travels with the breast facing the gear-wheel assembly 3, so that fig. 2 shows a view of portion of the back of the body of a slaughtered bird.

Mounted to the frame 1 is also a cutting apparatus consisting of two juxtaposed cutting members 13, each provided with disc-shaped cutter 14, rotated by means of a drive, not shown. The cutters rotate in opposite directions in the same horizontal plane and are located at a short distance on either side of the vertical plane located centrally between the chains 6b and 6c. This plane will be designated hereinafter as central vertical plane.

In the central vertical plane, there is provided a lever 16 which is rotatable about a spindle shaft 15 that is fixed with respect to the frame 1 and which consists of an arm member 17 and an arm member 20 consisting of two parts 18, 19 adjustable with respect to one another. The lever 16 is urged against an abutment, not shown, into the rest or initial position as illustrated in fig. 1 under the influence of a spring 21 which at one end is connected to the extremity of the arm member 17 and at the other end, in a location below the spindle shaft 15, is connected to the frame 1.

The free end of the arm 20, i.e. the uppermost end of the arm part 18, is provided with a scoop-shaped member 22 which is open on the supply side as well as on the lower and upper sides. The upper edge of said scoop-shaded member 22 is provided, on the supply side, with an inclined downwardly directed, relatively narrow projection 23.

Provided on the frame 1 are, in symmetric relation with respect to the central vertical plane, two guide rods, as at 24, forming a passage means for the body 12, the passage width gradually decreasing from the supply side in the direction of travel and gradually rising up to the cutters, as at 14, to horizontally continue from this point on at a short distance above the cutters. A wing catch or check rod 25 is provided underneath a section of each guide rod 24.

The lever 16 and/or guide arrangement formed by the guide rods 24 are/is provided with a view to positioning an arriving body 12 in such a manner with respect to the cutting members 14 that the edge portion 26 of the body, which forms the boundary of the opening 27, present between the legs, with the breast part, is brought underneath the cutting plane of the cutting members 14 so that dividing the body 12 results in a back half denoted by 28, comprising the legs, the thighs and a portion of the back, and a front half separated therefrom and comprising the complete breast. The front half cut off from the back half 28 is not shown in fig. 1 and may be considered as having been collected already.

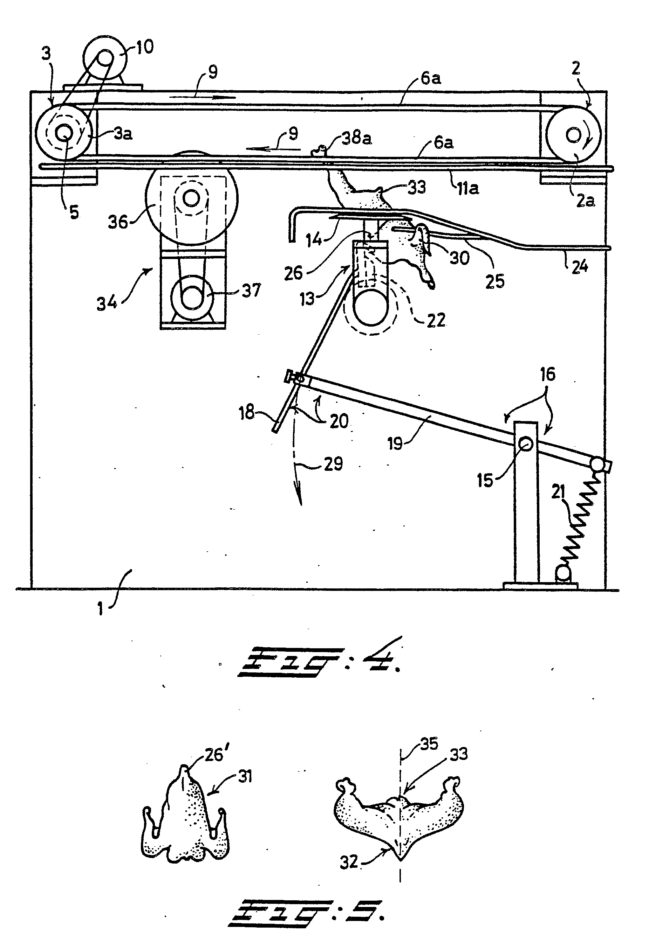

Said object is attained according to the invention in that during conveyance the body 12 comes into abutment with the free end of the arm 20 provided with the scoop-shaped member 22, the projection 23 extending over the edge portion 26 of the opening 27 of the body 12 and the forward movement of the lower part of the body 12 being slowed down under the influence of the spring 21. As a result, the body 12 will be inclined and the edge portion 26 will be engaged between the transition of the scoop-shaped member 22 and the projection 23, so that during the downward movement of the arm 20 the edge portion 26 is pulled between the cutter means 14 and underneath the cutting face of the cutters 14, thus resulting in the situation as shown in Fig. 3. The cutting members 14 will then divide the body 12 according to the line desired, the breast part not being touched by the cutting members 14.

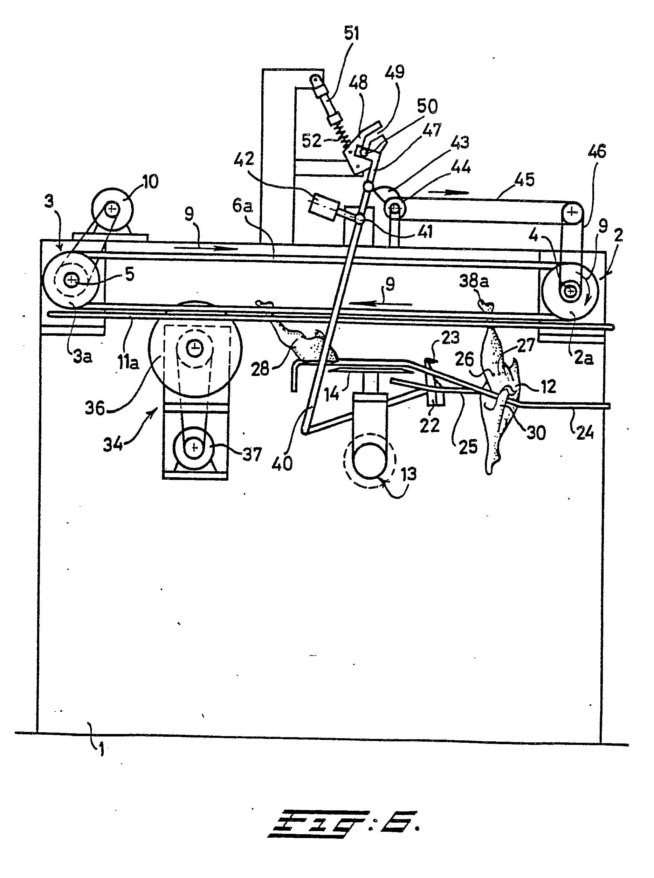

As the body continues its travel, the arm 20, as shown in fig. 4, will continue its downard movement as defined by the arrow 29, so that the edge portion 26 is pulled further in the direction of travel and further downwardly, thus further tilting the lower part of the body with respect to the back half supported on the guide rods 24, whereby the body can be cut easily and without the occurrence of undesirable damage to the part so cut. During this situation, shown in fig. 4, the wing parts 30, will be lifted somewhat. In order to prevent these wing parts from being damaged by the cutters 14, they are received by check rods 25 running between the trunk and the wing parts 30. This arrangement also provides extra protection against damage to the back caused by the cutters.

As soon as the front half of the body has been separated from the back half, as at 28 in fig. 1, the said back half will continue its travel over the guide rods 24, thus precluding damage thereof caused by the cutting members 14. At the same time, the lever 16 will return to its initial position as shown in fig. 1, under the influence of the spring 21, the cut-off front half, when dropping, being thrown off by the scoop-shaped member 22 of the cutting members 13. As a result, in practical terms, obstruction of, particularly, the cutting members is prevented, and the front half can be collected and removed in an easier manner.

The halves obtained by the processing steps as described hereinbefore are illustrated in fig. 5. In Fig. 5, the front half is indicated by reference numeral 31 showing the breast part whose portion 26' is the edge portion mentioned hereinbefore, which is pulled underneath the cutters by means of the projection 23. The rear half is indicated by reference numeral 32 which shows the back side thereof. In the complete body, the portion 33 is opposite the edge portion 26'.

The back half actually consists of two back-quarters each comprising a leg, a piece of thigh and a portion of the back. In a preferred embodiment, these quarters are separated from each other by means of another cutting member 34 on the line 35, so that two individual, commercially attractive back-quarters are obtained. Consequently, the cutting member 34 comprises a disc-shaped cutter 36 disposed in the central vertical plane and rotatably driven by a drive mechanism 37.

It should be noted that for the purpose of tilting the body 12 and pulling the edge portion 26 underneath the cutting plane of the cutter means 14, other solutions are conceivable within the scope of the invention. They may or may not comprise the use of guide rods 24, while in-stead of the lever 16, it would be possible to use pull rods which may be coupled to the drive means and which may be active, for example pneumatically operated, elements.

Although the embodiment of the apparatus of the invention as shown in figures 1 to 4 is a relatively simple and inexpensive embodiment, the embodiment as per fig. 6 is to be preferred because of its higher processing speed and the larger collecting space underneath the cutting apparatus for the cut-off front halves of the body of a slaughtered bird.

In the preferred embodiment of the apparatus according to the invention as shown in fig. 6, the arm in the form of a bracket 40 substantially has a U-shape having legs of unequal lengths. The scoop-shaped member 22 with the projection 23 is attached to the free end of the short leg of the bracket 40. The short bracket leg is guided between the pair of cutting members 13, so that, during displacement of the short leg, the scoop 22 can move to a point underneath the cutters 14. The long leg of the bracket 40 is rotatable about a spindle 41 which is perpendicular to the plane of the drawing. The distance between the legs is at least such that the long leg is not in contact with the rear parts 28 of the bodies.

A weight 42 is fixed to the bracket 40 at a location such that the bracket 40 is urged into the initial position as shown in fig. 6. Upon engagement of the projection 23 about the edge portion 26 of the opening 27 of the next body 12 arriving, the projection 23 will be brought into an inclined direction underneath the cutters 14 during the travel of the body 12, thus tilting the front half of the body just as in figures 3 and 4. A brake cylinder 51 having a spring 52 is pivotably connected with each end to the frame 1 and the plate 48, respectively.

It should be noted that within the scope of the invention an embodiment is also conceivable wherein the portion shown in fig. 6 having the weight 42, the cam 43 and the damping device with brake cylinder 51, is disposed below the level of the cutter means 14 and may be coupled to the lever 16 of the embodiment of fig. 1.

## Claims

1. A method for dividing the body of a slaughtered fowl transversally into a back half (28, 32) consisting of the legs, pieces of thighs corresponding to said legs and a portion of the back, and a front half (31), consisting of a breast part and a major portion of the back part of the body, characterised in that said body (12) supsended by its legs from a conveying means, being advanced with its breast forwardly directed in the direction of conveyance (9) and being cut to said halves ((28; 32), 31 resp.) during its conveyance by a cutting operation in which prior to and during said cutting operation, the body (12) is brought into an inclined position relative to said direction of conveyance (9) such that the legs are positioned in front of the rest of the body (12), while a boundary with the breast forming edge portion (26; 26') of the rear opening (27) of the body (12) present between the legs is pulled away from between the legs, and that said cutting operation is performed transversally in a plane extending between said pulled away edge portion (26; 26') and the thighs.

2. A method according to claim 1, characterised in that the back half (28; 32) of the body (12) suspended from the conveying means is supported at least in the area where the cutting operation is performed.

3. A method according to claim 1 or 2, characterised in that the cut-off back half (28) of the body suspended from the conveying means is cut longitudinally by a subsequent cutting operation in a plane (35) extending vertically between the legs.

4. An apparatus suitable for dividing the body of a slaughtered fowl into a back half consisting of the legs, pieces of thighs corresponding to said legs and a portion of the back, and a front half consisting of the breast part and a major portion of the back part of the body characterised by a conveyor system (2—11) connectd to a frame (1) and adapted for conveying said body (12) which is suspended by its legs during its conveyance, said body (12) passing with its breast in the direction of conveyance (9) through a cutting apparatus provided on the frame (1); and an arm (20; 40) which is pivotably mounted to said frame (1), said arm (20; 40) being pivotable on a spingle (15; 41) extending perpendicular to the direction of conveyance (9) between an upper position of one free end of the arm (20; 40), to which position it is forced by a counteracting device (21; 42—51), and a lower position of said free end, said lower position being downstream of said upper position when viewed in the direction of conveyance (9), said free end being provided with a gripping element engaging a boundary of the breast forming edge portion (26; 26') of the rear opening (27) present between the legs so that during conveyance of the body (12) engaging the gripping element the arm (20; 40) is pivoted with its free end downwardly, said edge portion (26, 26') is pulled downwardly and the breast is pivoted correspondingly and that the body (12) is cut transversally by at least one cutter (14) of the cutting apparatus in a plane extending between said downwardly pulled edge portion (26; 26') and the thighs.

5. An apparatus according to claim 4, characterised in that the gripping element consists of a projection (23), which is inclined downwardly and in a direction opposite to the direction of conveyance (9) and which is adapted to extend beyond said edge portion (26; 26') into said engaging body (12) during pivoting of the arm (20; 40).

6. An apparatus according to claim 4 or 5, characterised in that a scoop-shaped element (22) is fixed to the arm (20; 40) below the gripping element and being capable of partially receiving the breast of the body (12).

7. An apparatus according to claim 4, 5 or 6, characterised in that the counteracting device consists of a spring (21) connected between the arm (20) and the frame (1) and providing a torque which forces the free end to its upper position.

8. An apparatus according to claim 4, 5 or 6, characterised in that the counteracting device consists of a weight (42) fixed to the arm (40) and providing a torque which forces the free end to its upper position.

9. An apparatus according to claim 7 or 8, characterised by a cam (43) which is rotatably driven about a spindle shaft (44) perpendicular to the direction of conveyance (9) in synchronism with the conveyance of a series of bodies (12) and which by pushing against the arm (40), returns the free end thereof from the lower position to the upper position thereof.

10. An apparatus according to claim 9, characterised in that a damping device (47—52) is coupled to the arm (40).

11. An apparatus according to one of the claims 4—10, characterised in that the pivot of the arm (40) is located at a level above the cutter.

12. An apparatus according to one of the claims 4—11, characterised by a guide arrangement (24) providing a longitudinal passage for the body (12) running substantially in the direction of conveyance (9), the width of the passage gradually decreasing in the direction of conveyance (9) to such an extent and the borders of the passage rising to such an extent that in the area where the body (12) is cut, the thighs project laterally beyond the passage borders and the body (12) takes an inclined, backwardly directed position.

13. An apparatus according to one of the claims 4—12, characterised by a guide system extending over the first cutter (14) and adapted to support the suspended cut-off back half (28) of said body (12).

14. An apparatus according to one of the claims 4—13, characterised in that the cutting apparatus comprises at least one additional cutter (36) which, viewed in the direction of conveyance (9), is disposed downstream of said transverse cutting cutter (14) and which cut the suspended cut-off back half (28) of the body longitudinally in a plane (35) extending vertically between the legs of said body (12).

15. An apparatus according to one of the claims 4—14, characterised by two of said transverse cutting cutters (14) each being disc shaped and disposed in a common plane at a small distance from each other at opposite sides of a plane extending substantially vertically between the legs of said body (12) and driven rotatably in opposite directions.

**Patentansprüche**

1. Verfahren zum Zerteilen des Körpers eines geschlachteten Geflügels in Querrichtung in eine hintere Hälfte (28, 32), die aus ben Beinen, den zu diesen gehörigen Oberschenkeln und einem Teil des Rückens besteht, une eine vordere Hälfte (31), die aus einem Brustteil und einem größeren Teil des Rückens des Körpers besteht, dadurch gekennzeichnet, daß der Körper (12) mit den Beinen an Fördermitteln aufgehängt mit der Brust nach vorwärts in Förderrichtung (9) weisend transportiert wird und während seiner Bewegung in die genannten beiden Hälften ((28; 32) bzw. 31) durch einen Schneidvorgang zerschnitten wird, bei welchem vor und während des Schneidvorganges der Körper (12) in eine geneigte Stellung relative zu der Vörderrichtung (9) gebracht wird, so daß die Beine in eine Lage vor dem übrigen Teil des Körpers (12) gelangen, während ein Rand mit den Teile der Brust bildenden Eckbereichen (26; 26') der hinteren Öffnung (27) des Körpers (12) zwischen den Beinen aus diesem Bereich weggezogen wird, und daß der genannte Schneidvorgang transversal in einer Ebene durchgeführt wird, die sich zwischem dem weggezogenen Eckenbereich (26; 26') und den Oberschenkeln erstreckt.

2. Verfahren nach Anspruch 1, dadurch gekennzeichnet, daß die hintere Hälfte (28; 32) des Körpers (12), die an den Fördermitteln aufgehängt ist, zumindest in dem Bereich abgestützt ist, in welchem der Schneidvorgang durchgeführt wird.

3. Verfahren nach Anspruch 1 oder 2, dadurch gekennzeichnet, daß die abgeschnittene hintere Hälfte (28) des an den Fördermitteln aufgehängten Körpers durch einen nachfolgenden Schneidvorgang in Längsrichtung in einer Ebene (35) zerteilt wird, die sich vertikal zwischen den Beinen erstreckt.

4. Vorrichtung zum Zerteilen des Körpers eines geschlachteten Geflügels in eine hintere Hälfte, die aus den Beinen, Teilen der zu diesen gehörenden Oberschenkeln und einem Teil des Rückens besteht, und eine vordere Hälfte, die aus dem Brustteil und einem größeren Teil des Rückens des Körpers besteht, gekennzeichnet durch ein Förderersystem (2—11), das an einem Rahmen (1) montiert ist und so ausgebildet ist, daß es den Körper (12), der während der Förderung an seinen Beinen aufgehängt ist, und mit seiner Brust in Förderrichtung (9) weist, durch eine Schneideinrichtung, welche an dem Rahmen (1) angeordnet ist, zu transportieren vermag, und durch einen Arm (20, 40), welcher an dem Rahmen (1) schwenkbar gelagert ist, wobei der Arm (20, 40) an einer Achse (15, 41), die sich senkrecht zur Förderrichtung (9) erstreckt, zwischen einer oberen Stellung eines freien Endes des Armes (20; 40) in welche er durch eine Vorspanneinrichtung (21; 42—51) gedrängt wird, und einer unteren Stellung seines freien Endes schwenkbar ist, welche in Förderrichtung (9) blickend stromabwärts von der oberen Stellung gelegen ist, und wobei das freie Ende mit einem Greifelement versehen ist, das einen Rand des Teil der Brust bildenden Eckenbereiches (26; 26') der hinteren Öffnung (27) zwischen den Beinen erfaßt, so daß während der Förderung des Körpers (12), welcher mit dem Greifelement in Eingriff kommt, der Arm (20; 40) mit seinem freien Ende nach abwärts geschwenkt wird und der genannte Eckenbereich (26, 26') nach abwärts gezogen wird und die Brust entsprechend verschwenkt wird, und ferner dadurch gekennzeichnet, daß der Körper (12) transversal durch mindestens ein Schneidgerät (14) der Schneidvorrichtung in einer Ebene zerteilt wird, welche sich zwischen dem nach abwärts gezogenen Eckenbereich (26; 26') und den Oberschenkeln erstreckt.

5. Vorrichtung nach Anspruch 4, dadurch gekennzeichnet, daß das Greifelement aus einem Vorsprung (23) besteht, welcher nach abwärts und in einer Richtung entgegengesetzt der Förderrichtung (9) geneigt ist und welches so ausgebildet ist, daß es sich über den genannten Eckenbereich (26; 26') hinaus in den mit ihm in Eingriff kommenden Körper (12) hinein erstreckt, wenn der genannte Arm (20; 40) seine Schwenkbewegung ausführt.

6. Vorrichtung nach Anspruch 4 oder 5, dadurch gekennzeichnet, daß an dem Arm (20; 40) unterhalb des Greiferelementes ein schöpfartiges Element (22) befestigt ist, welches die Brust des Körpers (12) teilweise umfaßt.

7. Vorrichtung nach Anspruch 4, 5 oder 6, dadurch gekennzeichnet, daß die Vorspannmittel die Gestalt einer Feder (21) haben, die zwischen dem Arm (20) und dem Rahmen (1) gespannt ist und ein Drehmoment ausübt, welches das freie Ende des Armes in seine obere Stellung drängt.

8. Vorrichtung nach Anspruch 4, 5 oder 6, dadurch gekennzeichnet, daß die Vorspannmittel die Gestalt eines Gewichtes (42) haben, das an dem (40) befestigt ist und eine Drehmoment ausübt, welches das freie Ende des Armes in seine obere Stellung drängt.

9. Vorrichtung nach Anspruch 7 oder 8, gekennzeichnet durch eine Kurvenscheibe (43), welche un eine Achse (44) in Umdrehung versetzbar ist, welche zur Förderrichtung (9) senkrecht steht, wobei der Antrieb in Synchronismus mit der Förderung einer Reihe von Körpern (12) erfolgt und wobei die Kurvenscheibe durch Anlaufen gegen den Arm (40) das freie Ende des Armes von der unteren Stellung in die obere Stellung des Armes zurückführt.

10. Vorrichtung nach Anspruch 9, dadurch gekennzeichnet, daß eine Dämpfungsvorrichtung (47—52) mit dem Arm (40) gekoppelt ist.

11. Vorrichtung nach einem der Ansprüche 4 bis 10, dadurch gekennzeichnet, daß die Schwenklagerung des Armes (40) auf einem Niveau oberhalb der Schneidvorrichtung gelegen ist.

12. Vorrichtung nach einem der Ansprüche 4 bis 11, gekennzeichnet durch eine Führungsanordnung (24), welche einen in Längsrichtung verlaufenden Durchgang für den Körper (12) aufweist, der sich im wesentlichen in Förderrichtung (9) erstreckt und der eine Weite hat, die in Förderrichtung (9) im wesentlichen in solchem Maße abnimmt und dessen Ränder in solchem Maße ansteigen, daß in dem Bereich, in welchem der Körper (12) zerteilt wird, die Oberschenkel seitlich über die Ränder des Durchgangs hinausragen und der Körper (12) eine geneigte, nach rückwärts gerichtete Lage einnimmt.

13. Vorrichtung nach einem der Ansprüche 4 bis 12, gekennzeichnet durch ein Führungssystem, welches sich über die erstgenannte Schneidvorrichtung (14) erstreckt und so ausgebildet ist, daß es die abgeschnittene, rückwärtige Hälfte (28) des Körpers (12) abstüzt.

14. Vorrichtung nach einem der Ansprüche 4 bis 13, durch gekennzeichnet, daß die Schneidvorrichtung zumindest ein zusätzliches Schneidgerät (36) enthält, welches in Förderrichtung (9) blickend stromabwärts von dem in Querrichtung wirkenden Schneidgerät (14) angeordnet ist und welches die abgetrennte, aufgehängte rückwärtige Hälfte (28) des Körpers in Längsrichtung in einer Ebene (35) durchtrennt, welche sich vertikal zwischen den Beinen des Körpers (12) erstreckt.

15. Vorrichtung nach einem der Ansprüche 4 bis 14, gekennzeichnet durch zwei in Querrichtung wirkende Schneidgeräte (14), welche jeweils scheibenförmige Gestalt haben und in einer gemeinsamen Ebene in geringem Abstand voneinander auf einander gegenüberliegenden Seiten einer Ebene angeordnet sind, die sich im wesentlichen vertikal zwischen den Beinen des Körpers (12) erstreckt, wobei die scheibenförmigen Schneidgeräte in entgegengesetzter Richtung in Umdrehung versetzbar sind.

## Revendications

1. Procédé pour découper transversalement le corps d'une volaille abattue en une moitié arrière (28, 32) consistant en pattes, morceaux de cuisses correspondant auxdites pattes et une partie du dos, et une moitié avant consistant en la poitrine et en la majeure partie du dos du corps, caractérisé en ce que ledit corps (12), suspendu par les pattes à un moyen de transport, étant avancé la poitrine en avant dans la direction du transport et étant coupé en lesdites moitiés (28; 32, 31) pendant son déplacement par une opération de découpe dans laquelle, avant et pendant ladite opération de découpe, le corps (12) est amené dans une position inclinée relativement à ladite direction de transport (9) de telle façon que les pattes sont positionnées en avant du reste du corps (12), pendant qu'une partie de bord (16; 26') formant limite avec la poitrine, de l'ouverture arrière (27) du corps (12) située entre les pattes est arrachée d'entre les pattes, et que ladite opération de découpe est réalisée transversalement dans un plan s'étendant entre ladite partie de bord tirée en avant (26, 26') et les cuisses.

2. Procédé selon la revendication 1, caractérisé en ce que la moitié arrère (28; 32) du corps (12) suspendu au moyen de transport est soutenue au moins dans la zone où l'opération de découpe est réalisée.

3. Procédé selon l'une des revendications 1 et 2, caractérisé en ce que la moitié arrière découpée (28) du corps suspendu au moyen de transport est découpée longitudinalement par une opération de découpe postérieure dans un plan (35) s'étendant verticalement entre les pattes.

4. Appareil convenable pour découper le corps d'une volaille abattue en une moitié arrière comprenant les pattes, des morceaux de cuisses correspondant auxdites pattes et un morceau du dos, et une moitié avant comprenant la poitrine et la plus grande partie du dos du corps, caractérisé par un système de transport (2—11) fixé à un cadre (1) et propre au transport dudit corps (12) qui est suspendu par les pattes pendant le déplacement, ledit corps (12) passant, la poitrine dans la direction du déplacement (9), à travers un appareil de découpe fixé au cadre (1); et un bras (20; 40) qui est monté de façon pivotante sur ledit cadre (1), ledit bras (20; 40) pouvant pivoter sur un axe (15; 41) perpendiculaire à la direction du déplacement (9) entre une position haute d'une extrémité libre du bras (20; 40) vers laquelle il est sollicité par un dispositif antagoniste (21; 42—51), et une position basse de ladite extrémité libre, ladite position basse étant en aval par rapport à ladite position haute quand on regarde dans la direction du déplacement (9), ladite extrémité libre étant munie d'un élément de prise, coopérant avec une limite de la poitrine formant morceau de bordure (26; 26') de l'ouverture arrière (27) située entre les pattes de telle façon que pendant le déplacement du corps (12) en prise avec l'élément de prise, le bras (20; 40) pivote avec son extrémité libre vers le bas, ladite portion de bordure (26, 26') est tirée vers le bas et la poitrine pivote de façon correspondante et que le corps (12) est coupé transversalement par au moins une lame (14) de l'appareil de découpe dans un plan s'étendant entre ladite portion de bordure tirée vers le bas (26; 26') et les cuisses.

5. Appareil selon la revendication 4, caractérisé en ce que l'élément de prise consiste en une saillie (23), qui est inclinée vers le bas et dans une direction opposée à la direction de déplacement (9) et qui est propre à s'étendre au-delà de ladite portion de bord (26; 26') dans ledit corps (12) en prise pendant le pivotement du bras (20; 40).

6. Appareil selon l'une des revendications 4 et 5, caractérisé en ce qu'un élément en forme de pelle (22) est attaché au bras (20; 4;) au-dessous de l'élément de prise et est capable de recevoir partiellement la poitrine du corps (12).

7. Appareil selon l'une des revendications 4 à 6, caractérisé en ce que le dispositif antagoniste consiste en un ressort (21) situé entre le bras (20) et le cadre (1) et fournissant un couple qui sollicite l'extrémité libre dans sa position haute.

8. Appareil selon l'une des revendications 4 à 6, caractérisé en ce que le dispositif antagoniste consiste en un poids (42) fixé sur la bras (40) et fournissant un couple qui sollicite l'extrémité libre dans sa position haute.

9. Appareil selon l'une des revendications 7 et 8, caractérisé par une came (43) entraînée en rotation autour d'une axe (44) perpendiculaire à la direction de déplacement (9) en synchronisme avec le déplacement d'une série de corps (12) et qui, en poussant contre le bras (40), ramène l'extrémité libre de celui-ci de la position basse à la position haute.

10. Appareil selon la revendication 9, caractérisé en ce qu'un dispositif d'amortissement (47—52) est couplé au bras (40).

11. Dispositif selon l'une des revendications 4 à 10, caractérisé en ce que l'axe de pivotement du bras (40) est situé à un niveau plus haut que de la lame.

12. Appareil selon l'une des revendications 4 à 11, caractérise par un dispositif de guidage (24) fournissant un passage longitudinal pour le corps (12) pratiquement dans la direction de déplacement (9), la largeur du passage décroissant graduellement dans la direction de déplacement (9) à tel point et les bords du passage s'élevant de telle façon que dans la zone où le corps (12) est découpé, les cuisses dépassent latéralement au-delà des bords du passage et le corps (12) prend une position inclinée dirigée vers l'arrière.

13. Appareil selon l'une des revendications 4 à 12, caractérisé par un système de guidage s'étendant au-dessus de la première lame (14) et propre à soutenir la moitié arrière découpée suspendue (28) dudit corps (12).

14. Appareil selon l'une des revendications 4 à 13, caractérisé en ce que l'appareil de découpage comprend au moins une lame supplémentaire (36) qui, par référence à la direction du déplacement (9), est disposée en aval desdites lames de découpage transversales (14) et qui découpage longitudinalement la moitié arrière découpée suspendue (28) du corps dans un plan (35) s'étendant verticalement entre les pattes dudit corps (12).

15. Appareil selon l'une des revendications 4 à 14, caractérise en ce que deux desdites lames de découpe transversale (14) sont chacune en forme de disque et disposées dans un plan commun à une petite distance l'une de l'autre des deux côtés opposés d'un plan s'étendant pratiquement verticalement entre les pattes dudit corps (12) et mûs en rotation dans des directions opposées.

*Fig: 1.*

_Fig.2._

_Fig.3._

Fig:4.

Fig:5.

Fig. 6.